# EUROPEAN PATENT APPLICATION

(11) **EP 4 682 114 A1**
(43) Date of publication of application: **21.01.2026**
(21) Application number: 23927559.7
(22) Date of filing: 15.09.2023
(51) Int. Cl.: C02F 1/44, B01D 61/12

(54) **METHOD FOR CONTROLLING REVERSE-OSMOSIS MEMBRANE DEVICE IN PURE-WATER PRODUCTION DEVICE**

(30) Priority: 14.03.2023 JP 2023039727
(71) Applicant: Kurita Water Industries Ltd., Tokyo 164-0001 (JP)
(72) Inventor: MINATO, Yasuharu, Tokyo 164-0001 (JP)
(74) Representative: TBK
(86) International application number: PCT/JP2023/033726
(87) International publication number: WO 2024/189943

(57) **Abstract**

A method for controlling a reverse osmosis membrane device in a pure water production device according to the present invention includes reducing the opening degree of a control valve 62 to reduce the amount of primary pure water W2 being supplied to a sub-tank 41 if the amount of ultrapure water being used at a use point decreases and a measured value for a water level obtained by a water level meter 63 increases. In such an instance, on the basis of a measured value obtained by a pressure meter 61, a control means reduces the output of a high pressure pump 32A so that the measured value obtained by the pressure meter 61 remains substantially constant at a predetermined pressure. However, if the amount of ultrapure water being used at the use point increases and the measured value for the water level of the sub-tank 41 decreases, then the opening degree of the control valve 62 is increased to raise the amount of water being supplied to the sub-tank 41. In such an instance, on the basis of the measured value obtained by the pressure meter 61, the control means increases the output of the high pressure pump 32A so that the measured value obtained by the pressure meter 61 remains substantially constant at the predetermined pressure. Adopting such a configuration yields a feature in which water is stably fed even if the flow rate changes in a manner that follows the amount of water being used or another such parameter.

## Description

### Technical Field

The present invention relates to a method for controlling a reverse osmosis membrane device that constitutes a pure water production device, and particularly relates to a method for controlling a reverse osmosis membrane device in a pure water production device capable of controlling a water delivery amount of pure water according to an amount of water usage when producing ultrapure water to be used in the electronics industry fields such as semiconductor and liquid crystal.

### Background Technology

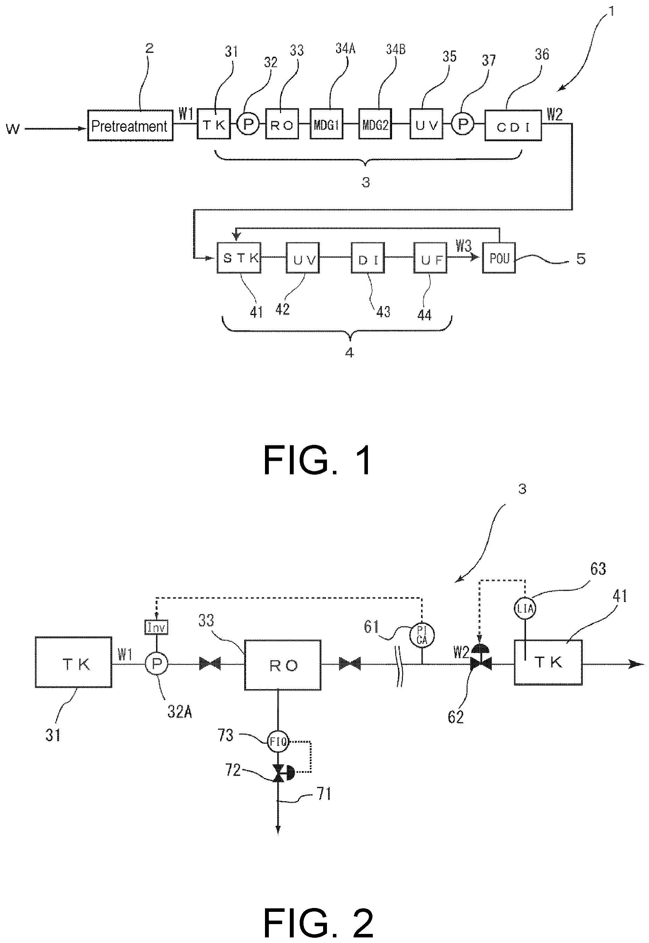

Conventionally, ultrapure water used in the electronics industry fields such as semiconductor is produced by processing raw water W in an ultrapure water production device 1 which is configured with three stages of devices, as shown in FIG. 1, for example, including a pretreatment device 2, a primary pure water device (pure water production device) 3, and a secondary pure water device (subsystem) 4. Specifically, in the pretreatment device 2, pretreatment is applied to raw water W by filtration, coagulation sedimentation, precision filtration membrane, etc., and suspended substances are mainly removed.

The primary pure water device 3 includes a water-to-be-treated tank 31 for storing pretreated water (water to be treated) W1, a high pressure pump 32 for delivering this pretreated water W1, a reverse osmosis membrane device 33, a first degassing membrane device 34A for removing dissolved gas by air, a second degassing membrane device 34B for further degassing dissolved gas by nitrogen gas, an ultraviolet oxidation device 35, an electrodeionization device 36, and a water supply pump 37 for supplying water to this electrodeionization device 36. This primary pure water device 3 removes most of the electrolytes, fine particles, viable bacteria, etc. in the pretreated water W1 and decomposes organic matter.

The subsystem 4 is a pure water using device produced in the primary pure water device 3, and is configured with a sub-tank 41 as a pure water tank arranged at the downstream stage of the electrodeionization device 36 for storing primary pure water (pure water) W2, an ultraviolet oxidation device 42, a non-regenerative mixed bed ion exchange device 43, and an ultrafiltration (UF) membrane 44 as a membrane filtration device for processing the primary pure water W2 supplied from this sub-tank 41 via a pump (not shown), and in some cases, an RO membrane separation device may also be provided as needed. In this subsystem 4, trace amounts of organic matter (TOC components) contained in the primary pure water W2 are oxidatively decomposed by the ultraviolet oxidation device 42, and then through processing with the non-regenerative mixed bed ion exchange device 43, residual carbonate ions, organic acids, anionic substances, as well as metal ions and cationic substances are removed by ion exchange. Then, fine particles are removed by the ultrafiltration (UF) membrane 44 to obtain ultrapure water W3, which is supplied to a use point 5, and unused ultrapure water is returned to the sub-tank 41.

In order to stably supply primary pure water of predetermined water quality, this ultrapure water production device 1 performs control such as producing an excess amount of primary pure water W2 in advance, supplying only the required amount to the sub-tank 41, and recycling the surplus portion.

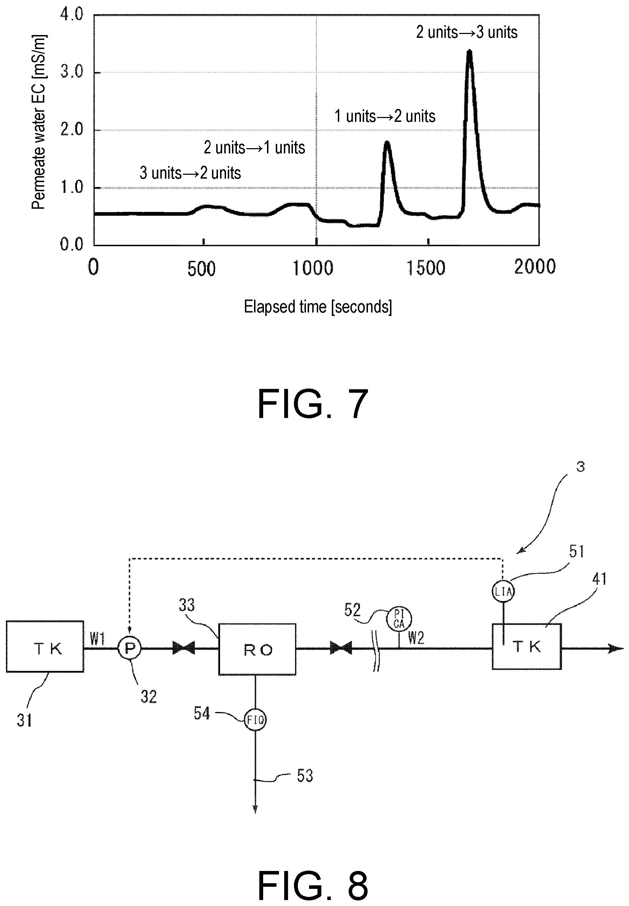

As a method for controlling the reverse osmosis membrane device 33 in the ultrapure water production device 1 as described above, as shown in FIG. 8, the water level of the sub-tank 41 is measured by a water level meter 51, and on/off control of the high pressure pump 32 is performed so that the water level of the sub-tank 41 remains within a predetermined range, and accordingly, the reverse osmosis membrane device 33 is repeatedly operated and stopped. In this case, the reverse osmosis membrane device 33 is operated at a constant concentration ratio during operation. It should be noted that 52 is a pressure meter for measuring the water delivery pressure of the permeate water from the reverse osmosis membrane 33, 53 is a recovery line for the concentrate water of the reverse osmosis membrane device 33, and 54 is a flow meter.

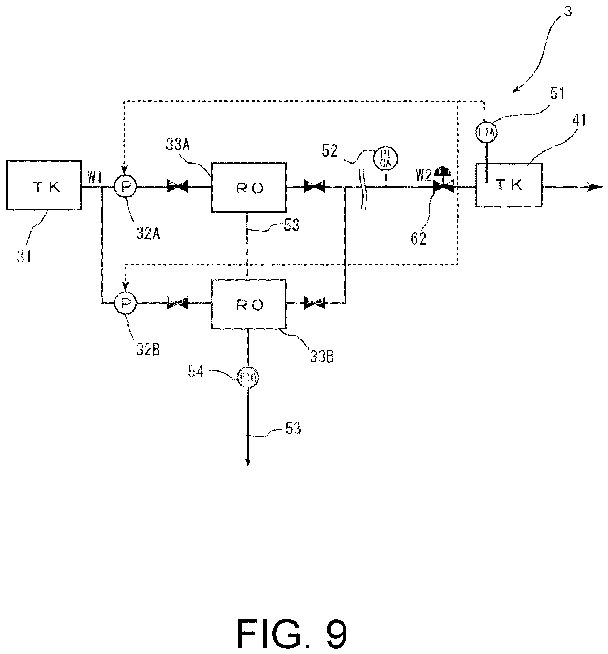

In addition, reverse osmosis membrane devices are often arranged in multiple series (two series in FIG. 8) in parallel with high pressure pumps 32 (32A, 32B) and reverse osmosis membrane devices 33 (33A, 33B) as shown in FIG. 9. In this case, however, the reverse osmosis membrane devices 33A and 33B are operated under constant conditions (constant flow rate/constant water supply pressure), and control is performed to start or stop both the reverse osmosis membrane devices 33A and 33B according to the amount of water usage or the water level of the sub-tank 41 of the downstream equipment, or the amount of water production is controlled by increasing or decreasing the operating series (sequentially stopping one or more series of the reverse osmosis membrane devices 33A and 33B) in conjunction with long-term adjustment of the amount of water usage.

### SUMMARY OF INVENTION

### Problem to be Solved by the Invention

Nevertheless, with the method for controlling the reverse osmosis membrane device 33 as shown in FIG. 8 and FIG. 9, there is a problem that not only does the amount of permeate water of the RO membrane decrease due to fouling caused by organic matter through years of use and accumulation of inorganic scale caused by high concentration, but also the membrane surface inside the reverse osmosis membrane elements may be physically damaged by water hammer caused by frequent starting and stopping of the reverse osmosis membrane device 33 (33A, 33B), which may lead to deterioration of ion removal rate. In addition, there is a problem that the reverse osmosis membrane device 33, when stopped for a period of time, experiences deterioration of water quality immediately after restarting due to deterioration of water quality on the permeate water side which results from diffusion of ions from the concentrate side. For this reason, it is common to perform cleaning before restarting operation, but it results in waste of the startup time and the amount of water usage.

The present invention has been made in view of the above problems, and aims to provide a method for controlling a reverse osmosis membrane device in a pure water production device that can stably deliver water even if the flow rate fluctuates in response to the amount of water usage, etc., and that does not involve membrane degradation associated with starting and stopping, deterioration of water quality, and membrane cleaning at restart.

### Means for Solving the Problem

In view of the above purpose, the present invention provides a method for controlling a reverse osmosis membrane device in a pure water production device including a water supply mechanism for water to be treated, the reverse osmosis membrane device, and a pressure meter that measures a water delivery pressure on a permeate water side of the reverse osmosis membrane device. The method includes: having a pure water using device at a downstream stage of the pure water production device, providing a flow adjustment mechanism for pure water supplied to the pure water using device between the pure water production device and the pure water using device, adjusting a supply amount of pure water by the flow adjustment mechanism in response to a required water amount of pure water of the pure water using device, and controlling water supply output of the water supply mechanism so that a measured value of the pressure meter remains substantially constant at a predetermined water delivery pressure (Invention 1).

According to this invention (Invention 1), the flow adjustment mechanism is controlled to increase or decrease the supply amount of pure water produced by the pure water production device in response to an increase or decrease in the required water amount of pure water at the pure water using device. With this increase or decrease in supply amount, the water supply pressure otherwise decreases or increases, so by controlling the water supply output of the water supply mechanism to keep the water supply pressure substantially constant at a predetermined pressure, the permeate water of the reverse osmosis membrane can be supplied stably without stopping the reverse osmosis membrane. This prevents membrane degradation and water quality deterioration associated with starting and stopping, and can significantly reduce the frequency of membrane cleaning at restart.

In the above invention (Invention 1), it is preferable that the reverse osmosis membrane devices are provided in multiple series in parallel (Invention 2). Particularly, in the above invention (Invention 2), it is preferable that the reverse osmosis membrane devices provided in multiple series in parallel are all operated (Invention 3).

According to this invention (Inventions 2, 3), even in the case where the reverse osmosis membrane devices are provided in multiple series in parallel, by controlling the water supply output of the water supply mechanism to keep the water supply pressure of the total of these substantially constant at a predetermined pressure, and by operating with reduced permeate water amount for each reverse osmosis membrane device, there is no need to stop the reverse osmosis membrane devices.

Further, in the above invention (Invention 2), operation of some of the reverse osmosis membrane devices provided in multiple series in parallel may be stopped (Invention 4).

According to the above invention (Invention 4), in the case where the required water amount of pure water at the pure water using device decreases to or below the flow rate of the water supply output adjustable by the water supply mechanism, it is possible to achieve more efficient operation by appropriately combining operations to reduce the number of operating series.

### Effects of Invention

According to the method for controlling the reverse osmosis membrane device in the pure water production device of the present invention, the supply amount of pure water is adjusted by the flow adjustment mechanism in response to the required water amount of pure water of the pure water using device, and the water supply output of the water supply mechanism is controlled so that the measured value of the pressure meter remains substantially constant at a predetermined water delivery pressure. Therefore, it is possible to stably supply the required amount of permeate water from the reverse osmosis membrane without stopping the reverse osmosis membrane. This can significantly reduce membrane degradation and water quality deterioration associated with starting and stopping, and can drastically reduce the frequency of membrane cleaning at the time of restarting the reverse osmosis membrane device.

### BRIEF DESCRIPTION OF THE DRAWINGS

[FIG. 1] is a schematic diagram showing an ultrapure water production device to which a method for controlling a reverse osmosis membrane device in a pure water device of the present invention can be applied.
[FIG. 2] is a schematic diagram showing a method for controlling a reverse osmosis membrane device in a pure water production device according to the first embodiment of the present invention.
[FIG. 3] is a schematic diagram schematically showing a method for controlling a reverse osmosis membrane device in a pure water production device according to the second embodiment of the present invention.
[FIG. 4] is a schematic diagram showing a reverse osmosis membrane device in a pure water production device in Example 1 and Comparative Example 1.
[FIG. 5] is a graph showing the relationship between water supply pressure and permeate water pressure in Example 1.
[FIG. 6] is a graph showing the water quality (electrical conductivity) of permeate water in Example 1.
[FIG. 7] is a graph showing the water quality (electrical conductivity) of permeate water in Comparative Example 1.
[FIG. 8] is a schematic diagram showing a method for controlling a reverse osmosis membrane device in a conventional pure water production device.
[FIG. 9] is a schematic diagram showing a method for controlling a reverse osmosis membrane device in another conventional pure water production device.

### DESCRIPTION OF THE EMBODIMENTS

A method for controlling a reverse osmosis membrane device in a pure water device of the present invention will be described below with reference to the attached figures.

### [First Embodiment]

### (Pure Water Production Device)

The present invention has characteristics in the control of a reverse osmosis membrane in a pure water production device (primary pure water device) used for an ultrapure water production device or the like. Here, there is no particular limitation on the pure water production device (primary pure water device), and various pure water production devices can be applied as long as they have a water supply pump as a water supply mechanism for supplying water to be treated, a reverse osmosis membrane device provided at a downstream stage of this water supply pump, and a pressure meter for measuring the water delivery pressure on the permeate water side of the reverse osmosis membrane device, and include one or two or more types of water treatment devices between the water supply pump and the pressure meter as necessary. For example, it can be suitably applied to a primary pure water device 3 in an ultrapure water production device 1 as shown in FIG. 1.

In the water production process in the primary pure water device 3 as shown in FIG. 1, the reverse osmosis membrane device 33 is controlled by a control system as shown in FIG. 2. That is, in FIG. 2, the primary pure water device 3 has a structure including a high pressure pump 32A capable of output adjustment by inverter control as a water supply mechanism at the downstream stage of the water-to-be-treated tank 31, and is capable of supplying pretreated water (water to be treated) W1 to the reverse osmosis membrane device 33, and after processing with the reverse osmosis membrane device 33, primary pure water W2 is produced by processing with that water treatment device, and the primary pure water (pure water) W2 produced in this primary pure water device 3 is stored in the sub-tank 41. In this primary pure water device 3, a pressure meter 61 for measuring the water delivery pressure on the permeate water side of the reverse osmosis membrane device 33 and a control valve 62 as a flow adjustment mechanism are provided at the downstream stage of the reverse osmosis membrane device 33, and a water level meter 63 is provided in the sub-tank 41. These pressure meter 61 and water level meter 63 are capable of transmitting information to a control mechanism (not shown), and this control mechanism is capable of controlling the high pressure pump 32A by inverter control so that the measured value of the pressure meter 61 remains substantially constant (for example, ±5%) at a predetermined pressure, and is capable of controlling the opening degree of the control valve 62 based on the measured value of the water level meter 63. 71 is a recovery line for concentrate water of the reverse osmosis membrane device 33, and a flow control valve 72 and a flow meter 73 are respectively provided in this recovery line 71. This concentrate water is processed by a recovery reverse osmosis membrane or the like and returned to the water-to-be-treated tank 31. It should be noted that water treatment units other than the reverse osmosis membrane device 33 are omitted from FIG. 2, but there may be other water treatment units between the reverse osmosis membrane device 33 and the pressure meter 61. Specifically, one or two or more types selected from an ultraviolet oxidation device, a degassing membrane, an electrodeionization device, a regenerative ion exchange device, a non-regenerative ion exchange device, etc. may be arranged.

### (Method for Controlling Reverse Osmosis Membrane Device)

A method for controlling the reverse osmosis membrane device shown in FIG. 2 will be described next.

In FIG. 2, the high pressure pump 32A is started to supply pretreated water (water to be treated) W1 from the water-to-be-treated tank 31, and pure water (primary pure water) W2 produced by processing with the reverse osmosis membrane device 33 and other water treatment units (not shown) provided as appropriate according to necessity is stored in the sub-tank 41. Then, the primary pure water W2 stored in this sub-tank 41 is sent to the subsystem according to the usage amount of ultrapure water at a use point (not shown), and ultrapure water is prepared in the subsystem and supplied to the use point.

In the treatment process performed by the reverse osmosis membrane device 33 of the primary pure water device 3 as described above, the reverse osmosis membrane device 33 is controlled as follows by the pressure meter 61 that measures the water delivery pressure, the control valve 62, the water level meter 63, and the high pressure pump 32A capable of inverter control.

First, a reference value (which may be a value within a predetermined range) for the water level of the sub-tank 41 is determined in advance. Then, when the usage amount of ultrapure water at the use point decreases and the measured value of the water level of the water level meter 63 increases above this reference value, a control means (not shown) throttles the control valve 62 to decrease the amount of water supply of primary pure water W2 to the sub-tank 41. As a result, the water supply pressure increases. Therefore, the control means decreases the output of the high pressure pump 32A by inverter control so that the measured value of the pressure meter 61 remains substantially constant at a predetermined pressure based on the measured value of the pressure meter 61. On the other hand, when the usage amount of ultrapure water at the use point increases and the measured value of the water level of the sub-tank 41 decreases below this reference value, the control means (not shown) opens the control valve 62 to increase the amount of water supply to the sub-tank 41. As a result, the water supply pressure decreases. Therefore, the control means increases the output of the high pressure pump 32A by inverter control so that the measured value of the pressure meter 61 remains substantially constant (for example, ±5%) at a predetermined pressure based on the measured value of the pressure meter 61.

By adjusting the supply amount of primary pure water W2 through the control valve 62 according to the required water level (water level of the sub-tank 41) of the subsystem, which is a pure water using device, in this way and by controlling the water supply output of the high pressure pump 32A, which is capable of output adjustment by inverter control, so that the measured value of the pressure meter 61 remains substantially constant at a predetermined water delivery pressure, it is possible to stably supply primary pure water W2 without stopping the reverse osmosis membrane device 33. This achieves the following effects (1) to (3).
(1) Conventionally, the reverse osmosis membrane device 33 is operated at constant amount of water supply and concentration ratio, and in the case of a concentration ratio of 5 times, for example, the operating conditions are as shown in Table 1 below. In contrast, in this embodiment, the concentrate water amount of the reverse osmosis membrane device 33 is operated substantially constant. Then, the amount of water supply of the reverse osmosis membrane device 33 is varied in response to the amount of water usage at the downstream use point. For example, in the case where the concentrate water amount is kept constant at 20 m³/h, the operating conditions are as shown in Table 2 below. As evident from Table 1 and Table 2, in this embodiment, the amount of concentrate water is kept constant and the amount of water supply is increased or decreased, so the concentration ratio fluctuates, and if the maximum value of the amount of water supply is the same as the conventional amount of water supply, the average value becomes smaller than the existing operation method. In other words, it can be said that the water-saving effect is high. It should be noted that since the concentrate water amount of the reverse osmosis membrane device 33 is kept constant, the effect of preventing fouling substances from adhering due to linear velocity is equivalent.

**[Table 1]**

| Water supply amount | Concentrate water amount | Permeate water amount | Recovery rate | Concentration ratio |
|---|---|---|---|---|
| 100 m³/h | 20 m³/h | 80 m³/h | 80% | 5 times |

**[Table 2]**

| Water supply amount | Concentrate water amount | Permeate water amount | Recovery rate | Concentration ratio |
|---|---|---|---|---|
| 100 m³/h | 20 m³/h | 80 m³/h | 80% | 5 times |
| 80 m³/h | 20 m³/h | 60 m³/h | 75% | 4 times |
| 60 m³/h | 20 m³/h | 40 m³/h | 67% | 3 times |

(2) A general reverse osmosis membrane device is operated at a water supply pressure of 0.5 MPa to 2.0 MPa. In terms of the existing operation control method for a reverse osmosis membrane device, in the reverse osmosis membrane device 33, a rapid pressure change occurs where the water supply pressure becomes 0 MPa each time the reverse osmosis membrane device is started or stopped. This poses a risk of physically damaging the reverse osmosis membrane surface of the reverse osmosis membrane device 33. In contrast, in this embodiment, the water delivery pressure of the reverse osmosis membrane device 33 is controlled by controlling the pump inverter of the high pressure pump 32A and the opening degree of the control valve 62 in response to the amount of water usage. Therefore, the frequency of starting and stopping the reverse osmosis membrane device 33 is extremely low, the water supply pressure changes seamlessly, and the number of rapid pressure changes is significantly reduced. This greatly reduces the risk of damaging the reverse osmosis membrane device 33 and physically damaging the reverse osmosis membrane surface.
(3) When a certain period of time has elapsed after stopping the reverse osmosis membrane device 33, ions, etc. reversely diffuse from the concentrate water side to the permeate water side in the stagnant water, causing deterioration of water quality on the permeate water side and resulting in poor water quality of the permeate water immediately after restarting operation. Therefore, cleaning of the reverse osmosis membrane is necessary before restarting water flow. In contrast, in this embodiment, temporary deterioration of water quality can be suppressed. What is more, by minimizing the starting and stopping of the reverse osmosis membrane device 33, it is possible to reduce the number of times of cleaning the reverse osmosis membrane before restarting operation, and to reduce the water amount required for cleaning.

### [Second Embodiment]

### (Pure Water Production Device)

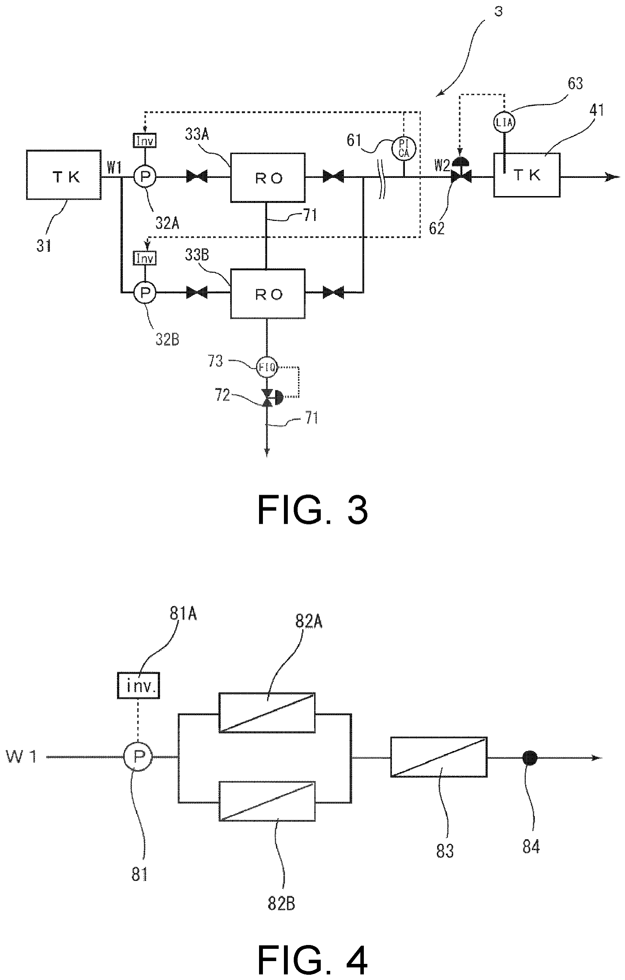

The second embodiment shown in FIG. 3 has the same configuration as the first embodiment shown in FIG. 2, except that the high pressure pumps 32A capable of output adjustment by inverter control and the reverse osmosis membrane devices 33 are provided in two series in parallel, so in FIG. 3, they are described as high pressure pumps 32A and 32B and reverse osmosis membrane devices 33A and 33B.

### (Method for Controlling Reverse Osmosis Membrane Device)

A method for controlling the reverse osmosis membrane device shown in FIG. 3 will be described next.

In FIG. 3, the high pressure pumps 32A and 32B are started to supply pretreated water (water to be treated) W1 from the water-to-be-treated tank 31 to the reverse osmosis membrane devices 33A and 33B for processing, and the pure water (primary pure water) W2 produced by processing with other water treatment units (not shown) provided as appropriate according to necessity is stored in the sub-tank 41. Then, the primary pure water W2 stored in this sub-tank 41 is sent to the subsystem according to the usage amount of ultrapure water at a use point (not shown), and ultrapure water is prepared in the subsystem and supplied to the use point.

In the treatment process performed by the reverse osmosis membrane devices 33A and 33B in this embodiment, the reverse osmosis membrane devices 33A and 33B are controlled as follows by the pressure meter 61 that measures the water delivery pressure, the control valve 62, the water level meter 63, and the high pressure pumps 32A and 32B capable of inverter control.

First, a reference value (which may be a value within a predetermined range) for the water level of the sub-tank 41 is determined in advance. Then, when the usage amount of ultrapure water at the use point decreases and the measured value of the water level of the water level meter 63 increases above this reference value, a control means (not shown) throttles the control valve 62 to decrease the amount of water supply of primary pure water W2 to the sub-tank 41. As a result, the water supply pressure increases. Therefore, the control means decreases the output of the high pressure pumps 32A and 32B by inverter control so that the measured value of the pressure meter 61 remains substantially constant (for example, ±5%) at a predetermined pressure based on the measured value of the pressure meter 61. On the other hand, when the usage amount of ultrapure water at the use point increases and the measured value of the water level of the sub-tank 41 decreases below this reference value, the control means (not shown) opens the control valve 62 to increase the amount of water supply to the sub-tank 41. As a result, the water supply pressure decreases. Therefore, the control means increases the output of the high pressure pumps 32A and 32B by inverter control so that the measured value of the pressure meter 61 remains substantially constant (for example, ±5%) at a predetermined pressure based on the measured value of the pressure meter 61.

By adjusting the supply amount of primary pure water W2 through the control valve 62 according to the required water amount of the subsystem, which is a pure water using device, in this way and by controlling the water supply output of the high pressure pumps 32A and 32B, which are capable of output adjustment by inverter control, so that the measured value of the pressure meter 61 remains substantially constant at a predetermined water delivery pressure, it is possible to stably supply primary pure water W2 without stopping both the reverse osmosis membrane devices 33A and 33B.

However, in the case where the required water amount of primary pure water W2 in the subsystem, which is a pure water using device, decreases to or below the adjustable flow rate of the water supply output of the high pressure pumps 32A and 32B (for example, to or below the sum of the minimum outputs of the high pressure pump 32A and the high pressure pump 32B), the operation can be continued by stopping either one and halting the processing of the reverse osmosis membrane device 33A or 33B. Although the second embodiment illustrates a case of two series, in the case of three or more series, if the required water amount decreases to or below the adjustable flow rate of the water supply output, the number of operating series may be reduced by stopping the high pressure pumps and reverse osmosis membrane devices. However, it is preferable to control the number of stopped series to be as few as possible.

Although the present invention has been described above based on the above embodiments, the present invention is not limited to the above embodiments, and various modifications can be implemented. For example, as the water supply mechanism, it is possible to provide not only the high pressure pump 32A capable of inverter control, but also a high pressure pump 32A at the downstream stage of the water supply pump, and use a combination of these as the water supply mechanism. Furthermore, a storage tank may be provided in the middle of the primary pure water device separately from the sub-tank 41, for example, at the downstream stage of the electrodeionization device 36, and control may be performed based on the water level of this storage tank, and if the required water amount of pure water W2 in the pure water using device such as the subsystem 4 can be determined by other means such as a flow meter regardless of the water level of the tank, the present invention can be applied to a system without a tank. Furthermore, the reverse osmosis membrane devices may be combined in parallel and in series. Moreover, the pure water production device is not limited to those for an ultrapure water production device.

### Example

The present invention will be described in more detail based on specific examples below, but the present invention is not limited to the following examples.

### [Example 1 and Comparative Example 1]

### (Test of Switching the Number of Reverse Osmosis Membranes)

As shown in FIG. 4, a testing device was prepared, including a high pressure pump 81 with an inverter 81A, reverse osmosis membrane devices 82A and 82B provided in parallel, and a reverse osmosis membrane device 83 for processing the concentrate water from these reverse osmosis membrane devices 82A and 82B, in which a sampling point 84 was provided on the permeate water side of the reverse osmosis membrane 83.

In this testing device, control was performed to maintain constant permeate water pressure and concentrate water flow rate, and the treatment of the water to be treated W1 was carried out with the number of water passages of the reverse osmosis membrane devices fixed at three.

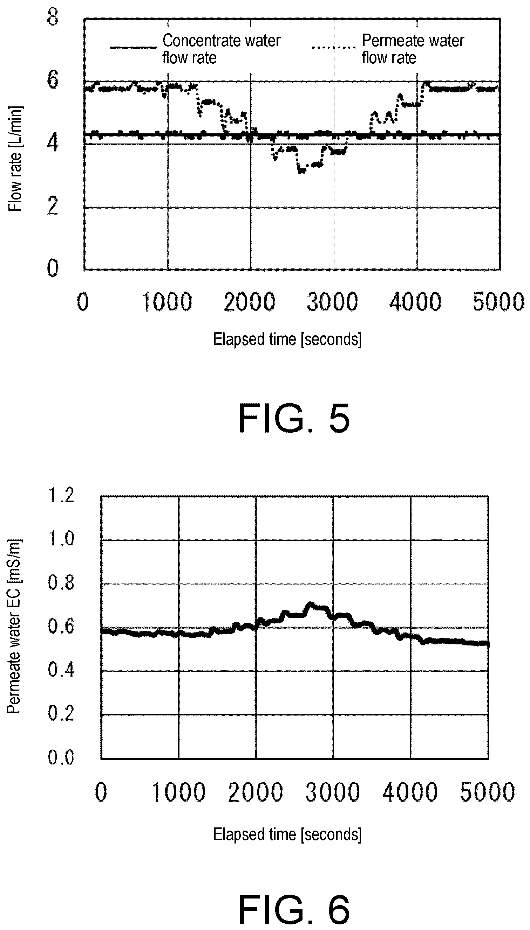

FIG. 5 shows the flow rate of permeate water and the flow rate of concentrate water of the reverse osmosis membrane devices 82A and 82B in this test, and FIG. 6 shows the results of measuring the electrical conductivity (EC) as the water quality of the permeate water measured at the sampling point 84.

In addition, assuming the required water amount at the use point fluctuates, the water supply pressure of the high pressure pump 81 and the flow rate of permeate water (treated water) of the reverse osmosis membrane devices 82A and 82B were varied, and accordingly, the water passage and stoppage to the reverse osmosis membranes 82A and 82B and the reverse osmosis membrane 83 were controlled (Comparative Example 1). Specifically, water passage tests were carried out in a similar manner by varying the number of water passages in order of decreasing flow rate: reverse osmosis membranes 82A and 82B and reverse osmosis membrane 63 (3 units), reverse osmosis membrane 82A and reverse osmosis membrane 83 (2 units), and reverse osmosis membrane 82A only (1 unit). The results of measuring the electrical conductivity (EC) as the water quality of permeate water of the reverse osmosis membranes 82A and 82B in this case are shown in FIG. 7 along with the changes in the number of water passages of the reverse osmosis membranes.

As evident from FIG. 6 and FIG. 7, in Example 1 where the reverse osmosis membranes 82A and 82B were constantly operated with control to maintain constant permeate water pressure and concentrate water flow rate, the fluctuation in water quality (electrical conductivity (EC)) was gradual. In contrast thereto, in Comparative Example 1 where the number of reverse osmosis membranes was increased or decreased, the water quality temporarily deteriorated with an increase in the number of operating units. This is considered to be because the quality of water retained on the permeate water side deteriorates during stoppage of the water passage of the reverse osmosis membrane, and this deteriorated retained water is released when water passage through the reverse osmosis membrane is restarted, indicating that cleaning is necessary before restart.

### Description of Reference Numerals

1 ultrapure water production device
2 pretreatment device
3 primary pure water device (pure water production device)
   31 water-to-be-treated tank
   32, 32A, 32B high pressure pump (water supply mechanism)
   33, 33A, 33B reverse osmosis membrane device
   34A first degassing membrane device
   34B second degassing membrane device
   35 ultraviolet oxidation device
   36 electrodeionization device
   37 water supply pump
4 secondary pure water production device (subsystem)
   41 sub-tank
   42 ultraviolet oxidation device
   43 non-regenerative mixed bed ion exchange device
   44 ultrafiltration (UF) membrane
5 use point
61 pressure meter
62 control valve (flow adjustment mechanism)
63 water level meter
71 recovery line
72 flow control valve
73 flow meter
W raw water
W1 pretreated water (water to be treated)
W2 primary pure water (pure water)
W3 secondary pure water (ultrapure water)

## Claims

1. A method for controlling a reverse osmosis membrane device in a pure water production device comprising a water supply mechanism for water to be treated, the reverse osmosis membrane device, and a pressure meter that measures a water delivery pressure on a permeate water side of the reverse osmosis membrane device, the method comprising: having a pure water using device at a downstream stage of the pure water production device, providing a flow adjustment mechanism for pure water supplied to the pure water using device between the pure water production device and the pure water using device, adjusting a supply amount of pure water by the flow adjustment mechanism in response to a required water amount of pure water of the pure water using device, and controlling water supply output of the water supply mechanism so that a measured value of the pressure meter remains substantially constant at a predetermined water delivery pressure.

2. The method for controlling the reverse osmosis membrane device in the pure water production device according to claim 1, wherein the reverse osmosis membrane devices are provided in multiple series in parallel.

3. The method for controlling the reverse osmosis membrane device in the pure water production device according to claim 2, wherein the reverse osmosis membrane devices provided in multiple series in parallel are all operated.

4. The method for controlling the reverse osmosis membrane device in the pure water production device according to claim 2, wherein operation of some of the reverse osmosis membrane devices provided in multiple series in parallel is stopped.
